# FASCICULE DE BREVET EUROPEEN

(11) **EP 1 418 831 B1**
(45) Date de publication et mention de la délivrance du brevet: **22.02.2006**
(21) Numéro de dépôt: 02770048.3
(22) Date de dépôt: 22.07.2002
(51) Int. Cl.: A47J 31/40

(54) **DOSEUR DE CAFE MOULU POUR MACHINE A INFUSION**
EINRICHTUNG ZUM DOSIEREN VON GEMAHLENEN KAFFEE FÜR BRÜHEINRICHTUNGEN
GROUND COFFEE DISPENSER FOR A DRIP MACHINE

(30) Priorité: 10.08.2001 FR 0110915
(43) Date de publication de la demande: 19.05.2004
(73) Titulaire: SEB S.A., 69132 Ecully (FR)
(72) Inventeur: MORIN, Gilles, F-14210 Saint Honorine du Fay (FR); PIOLET, Anne-Marie, F-14750 St Aubin Sur Mer (FR)
(74) Mandataire: Kiehl, Hubert
(86) Numéro de dépôt international: PCT/FR2002/002606
(87) Numéro de publication internationale: WO 2003/013324

(56) Documents cités:
- EP-A- 1 040 780
- DE-U- 9 104 032
- US-A- 4 860 930

## Description

La présente invention se rapporte aux doseurs de café moulu destinés à être incorporés dans un boîtier d'une machine à infusion comprenant une chambre à infusion calibrée et alimentée par une goulotte dont l'ouverture d'entrée s'ouvre sur l'extérieur du boîtier.

L'invention concerne plus précisément les doseurs de café moulu comportant une trappe montée pivotante dans la goulotte autour d'un axe transversal à ladite goulotte et agencée à une hauteur déterminée par rapport à l'ouverture d'entrée de la goulotte, déterminant ainsi un volume correspondant sensiblement au volume de la chambre à infusion lorsque ladite trappe occupe une position d'obturation.

On connaît déjà un doseur dans lequel la trappe comprend un tambour rotatif apte à délivrer une dose précise ou plusieurs doses répétitives de café dans la goulotte. Ce doseur constitue toutefois une pièce encombrante dans le boîtier de la machine et nécessite un nettoyage régulier afin d'empêcher son colmatage par le café moulu adhérant aux parois ; nettoyage requérant également le démontage de toutes les pièces de ce doseur.

Un doseur du type mentionné ci-dessus est décrit dans le document EP-A- 1 040 780. D'après ce document, la trappe présente une forme hémisphérique et est montée pivotante dans la goulotte autour d'un axe transversal à la goulotte. Cette trappe est munie d'une poignée de manoeuvre permettant à l'utilisateur de faire pivoter directement la trappe d'une position d'obturation à une position de déversement dans laquelle elle protège l'ouverture d'entrée de la goulotte. Cependant, il peut arriver que l'utilisateur actionne de manière brutale la trappe pour la faire pivoter, de sorte que la trappe subit des contraintes importantes au niveau de ses pivots, d'où un risque d'endommagement de la trappe pouvant rendre celle-ci inopérante.

L'invention a notamment pour but de réaliser un doseur qui présente une grande fiabilité.

Selon l'invention, un doseur de café moulu du type décrit précédemment, est caractérisé en ce que l'ouverture d'entrée de la goulotte est équipée d'un couvercle qui est monté pivotant autour d'un axe parallèle à l'axe transversal de la trappe entre une position d'introduction et une position de fermeture, et qui est relié à la trappe par un moyen mécanique de commande permettant de faire pivoter la trappe de sa position d'obturation à une position de déversement lorsque le couvercle pivote de sa position d'introduction à sa position de fermeture.

Ainsi, par cette liaison mécanique entre le couvercle et la trappe, un pivotement brusque du couvercle actionné par l'utilisateur assure un pivotement de la trappe sans aucune contrainte sur les pivots de celle-ci, rendant ainsi la trappe particulièrement fiable.

Les caractéristiques et avantages de l'invention ressortiront de la description qui va suivre, prise à titre d'exemple non limitatif, en référence aux dessins annexés dans lesquels :
La figure 1 est une vue en coupe verticale d'un doseur de café moulu selon l'invention incorporé à une goulotte de machine à infusion agencée dans un boîtier d'une machine à infusion et illustrant une trappe en position d'obturation ;
La figure 2 est une vue analogue à la figure 1 avec la trappe en une position légèrement basculée ;
La figure 3 est une vue en élévation selon la flèche F de la figure 2 avec arrachement partiel de la goulotte et sans schématisation du boîtier ;
La figure 4 est une vue analogue à la figure 1 sans schématisation du boîtier et avec la trappe en position de déversement.

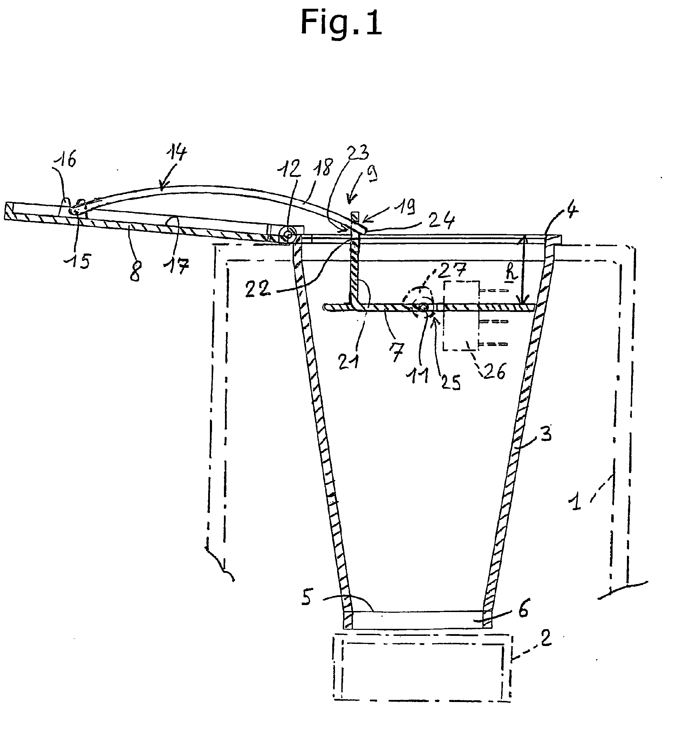

Sur la figure 1, on a représenté un doseur de café moulu destiné à être incorporé dans un boîtier 1, schématisé en traits interrompus, d'une machine à infusion de type classique destinée à préparer du café à partir de café moulu et comprenant une chambre à infusion calibrée 2, schématisée en traits interrompus, et alimentée par une goulotte 3 dont l'ouverture d'entrée 4 s'ouvre sur l'extérieur du boîtier 1. Dans ce type de machine, la goulotte 3 est déportée de l'orifice d'entrée de la chambre à infusion 2 de manière à permettre à un mécanisme non représenté de fermer ladite chambre pour confectionner l'infusion. Généralement la sortie 5 de la goulotte 3 présente une rampe 6 dirigée vers l'orifice d'entrée de la chambre 2 et adjacente au bord de cet orifice de manière à ne pas gêner le mécanisme d'infusion, par exemple la descente d'un piston.

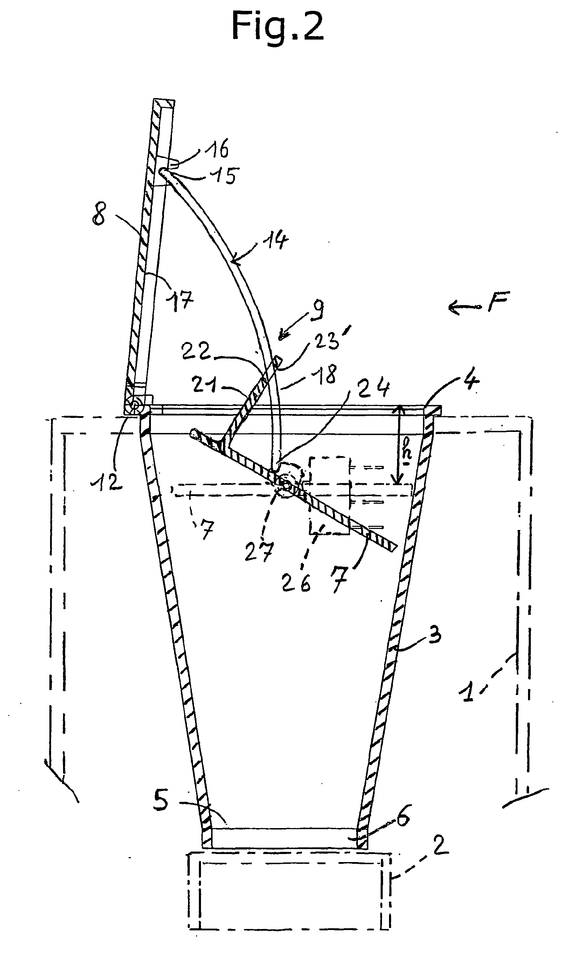

Selon l'invention le doseur de café moulu comporte une trappe 7 agencée mobile dans la goulotte 3 à une hauteur déterminée h par rapport à l'ouverture d'entrée 4 et déterminant ainsi un volume correspondant sensiblement au volume de la chambre d'infusion 2 lorsque ladite trappe occupe une position d'obturation (figure 1, et schématisée en traits interrompus sur la figure 2).

Dans l'exemple illustrée aux figures 1 à 4 la goulotte 3 présente un corps sensiblement tronconique avec une section horizontale sensiblement elliptique ; la trappe 7 devant alors, pour assurer la fermeture de façon pratiquement étanche, avoir une surface semblable à celle de la section horizontale de la goulotte.

Grâce à cette trappe, on réalise un doseur volumétrique de construction simple, économique et peu encombrante, et qui de surcroît peut être facilement mis en oeuvre par l'usager, par exemple, en provoquant un basculement ou un coulissement de la trappe par tout moyen de commande manuel ou mécanique (non représenté).

La sécurité de remplissage correct de la chambre à infusion est donc assurée et garantit ainsi le fonctionnement du dispositif d'infusion de la machine tel que le souhaite le constructeur. Comme on le comprendra, l'utilisateur, selon son goût, peut également verser dans la goulotte une quantité moindre de café en poudre que la quantité maximale définie par la trappe, ce qui était impossible avec les doseurs automatiques existants.

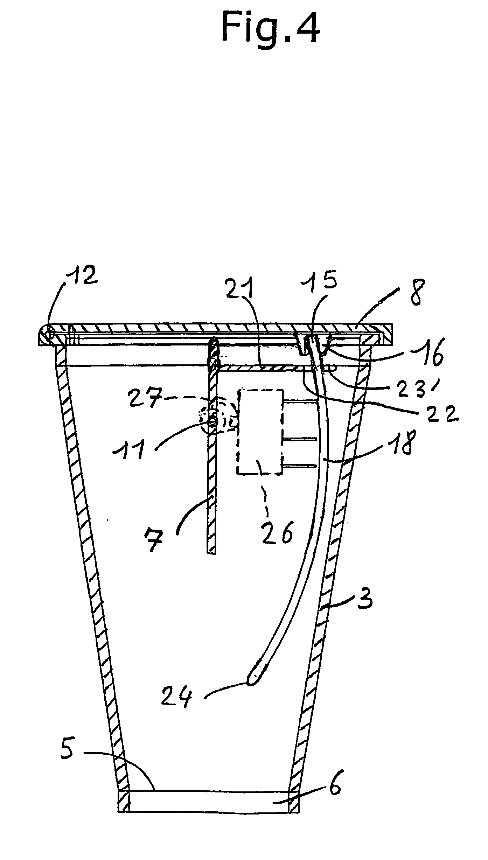

Selon un mode de réalisation préféré de l'invention, l'ouverture d'entrée 4 est équipée d'un couvercle 8 qui est monté mobile entre une position d'introduction (figure 1) et une position de fermeture (figure 4) et qui est relié par un moyen mécanique 9 à la trappe 7 pour la faire passer de sa position d'obturation à une position de déversement figures 2 à 4 lorsque le couvercle passe de sa position d'introduction à sa position de fermeture.

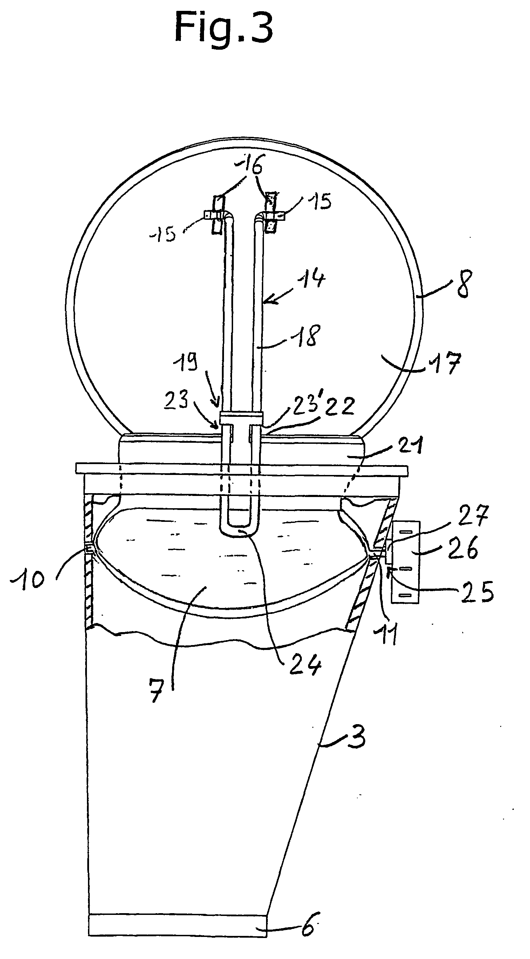

Comme le montrent les figures, la trappe 7 est montée pivotante dans la goulotte autour d'un axe transversal défini par deux pivot opposés 10, 11, et agencée dans la région médiane de la goulotte (figure 3), tandis que le couvercle 8 est monté pivotant autour d'un axe parallèle à l'axe transversal de la trappe et défini par deux articulations opposées dont une seule 12 est visible sur les figures et qui sont implantées sur le bord de l'ouverture 4.

Selon une autre caractéristique de l'invention, le moyen mécanique de commande 9 de la trappe 7 comporte une biellette 14 dont une extrémité 15 est montée articulée sur le couvercle autour d'un pivot 16 solidaire de la face interne 17 du couvercle 8 et dont le corps 18 est relié à la trappe 7 au moyen d'un dispositif à coulissement 19.

Selon un mode d'exécution préféré, le dispositif à coulissement comprend, d'une part, sur la trappe 7, dans une région de sa surface supérieure située entre les deux axes 10-11 et 12, une aile transversale 21 tournée vers l'ouverture d'entrée de la goulotte (en position notamment d'obturation) et présentant sur son bord libre 22 une glissière 23 venant en prise avec le corps 18 de la biellette 14, et d'autre part, sur la biellette, un crochet 24 agencé en son extrémité libre et destiné à venir en butée contre la glissière 23 lorsque le couvercle 8 est en sa position ouverte (figure 1). En regard des figures, on notera que la biellette 14 est conformée en épingle en U à deux branches dont chaque extrémité libre 15 est montée articulée sur le couvercle 8 autour d'un pivot 16, et dont le pli forme le crochet 24. Avantageusement, la biellette 14 est conformée en arc de cercle à concavité tournée vers l'axe 12 du couvercle, facilitant ainsi le glissement dans la glissière 23 et le mouvement de basculement de la trappe 7 tout en donnant au crochet 24 une fonction supplémentaire de racleur de la surface supérieure de la trappe 7.

Comme on le voit mieux sur la figure 3, la glissière 23 est formée dans une patte saillante du bord supérieur 22 de l'aile 21 et formant un té ; les bords inférieurs 23' de ce té et le bord 22 de cette aile constituant respectivement les logements pour les deux branches de la biellette 14.

Selon une autre caractéristique importante de l'invention, la trappe 7 comporte un dispositif de commande 25 d'un interrupteur 26 monté à l'extérieur de la goulotte 3 et destiné à commander un voyant lumineux (non représenté) d'indication du passage de la trappe de sa position d'obturation à sa position de déversement. Ce dispositif de commande 25 comporte une came rotative 27 montée sur l'axe de la trappe 7 et apte à commander l'interrupteur 26.

Le fonctionnement du doseur conforme à l'invention est le suivant.

Tout d'abord, en supposant que le couvercle 8 est en sa position d'introduction (figure 1), la biellette 14 est en position tendue entre les pivots 16 et la glissière 23. Le crochet 24, étant en butée avec cette glissière, tire sur l'aile 21 et donc par un effet de levier maintient la trappe 7 en sa position d'obturation. L'utilisateur verse alors le café en poudre dans le volume défini en prenant comme seule précaution l'arasement de cette poudre avec l'ouverture d'entrée 4 de la goulotte. Puis, l'utilisateur fait pivoter le couvercle 8 jusqu'à l'amener en sa positon de fermeture (figure 4). Au cours de ce pivotement, la biellette 14, interposée entre les pivots 16 et la glissière 23, prend appui contre les bords de la glissière 23, c'est à dire les bords opposés 23' du té et le bord 22 de l'aile 21, et tout en glissant agit à la manière d'un levier sur l'aile 21 provoquant ainsi le pivotement de la trappe 7 autour des pivots 10, 11 pour la faire passer de sa position d'obturation à sa position de déversement. Sous l'effet du coulissement de la biellette 14, le crochet 24 vient légèrement s'appuyer sur la surface supérieure de la trappe 7 et, tout en raclant cette surface, facilite le déversement de la poudre de café dans la goulotte 3. Ainsi, même en présence d'une certaine humidité régnant dans la machine à infusion et pouvant rendre plus ou moins compacte et adhérente la poudre de café, celle-ci est entraînée mécaniquement hors de la trappe.

## Revendications

1. Doseur de café moulu destiné à être incorporé dans un boîtier (1) d'une machine à infusion comprenant une chambre à infusion calibrée (2) et alimentée par une goulotte (3) dont l'ouverture d'entrée (4) s'ouvre sur l'extérieur du boîtier, comportant une trappe (7) montée pivotante dans la goulotte (3) autour d'un axe transversal (10, 11) à ladite goulotte et agencée à une hauteur déterminée h par rapport à l'ouverture d'entrée (4) de ladite goulotte (3), déterminant ainsi un volume correspondant sensiblement au volume de la chambre à infusion lorsque ladite trappe occupe une position d'obturation, **caractérisé en ce que** l'ouverture d'entrée (4) de la goulotte (3) est équipée d'un couvercle (8) qui est monté pivotant autour d'un axe (12) parallèle à l'axe transversal de la trappe (7) entre une position d'introduction et une position de fermeture, et qui est relié à la trappe (7) par un moyen mécanique de commande (9) permettant de faire pivoter la trappe (7) de sa position d'obturation à une position de déversement lorsque le couvercle (8) pivote de sa position d'introduction à sa position de fermeture.

2. Doseur de café selon la revendication 1, **caractérisé en ce que** le moyen mécanique de commande (9) de la trappe comporte une biellette (14) dont une extrémité (15) est montée articulée sur le couvercle (8) et dont le corps (18) est relié à la trappe au moyen d'un dispositif à coulissement (19).

3. Doseur de café selon la revendication 2, **caractérisé en ce que** le dispositif à coulissement comprend, d'une part, sur la trappe (7), dans une région de sa surface supérieure située entre les deux axes (10-11 ; 12), une aile transversale (21) tournée vers l'ouverture d'entrée de la goulotte et présentant sur son bord libre (22) une glissière (23) venant en prise avec le corps (18) de la biellette (14), et d'autre part, sur la biellette (14), un crochet (24) agencé en son extrémité libre et destiné à venir en butée contre la glissière (23) lorsque le couvercle (8) est en sa position d'introduction.

4. Doseur de café selon la revendication 3, **caractérisé en ce que** la biellette (14) est conformée en épingle en U à deux branches dont chaque extrémité libre (15) est montée articulée sur le couvercle (8), et la glissière (23) est formée dans une patte saillante du bord supérieur (22) de l'aile (21) et formant un té ; les bords inférieurs (23') de ce té et le bord (22) de cette aile constituent respectivement les logements pour les deux branches de la biellette.

5. Doseur de café selon la revendication 4, **caractérisé en ce que** le crochet (24) formé par le pli de l'épingle en U constitue un racleur de la surface supérieure de la trappe (7).

6. Doseur de café selon l'une quelconque des revendications précédentes, **caractérisé en ce que** la trappe (7) comporte un dispositif de commande (25) d'un interrupteur (26) monté à l'extérieur de la goulotte (3) et destiné à commander un voyant lumineux d'indication du passage de la trappe de sa position d'obturation à sa position de déversement.

7. Doseur de café selon la revendication 6, **caractérisé en ce que** le dispositif de commande (25) comporte une came rotative montée sur l'axe de la trappe (7) et apte à commander l'interrupteur (26) .

## Claims

1. Ground coffee dispenser intended to be incorporated in a casing (1) of an infusion machine comprising a calibrated infusion chamber (2) and supplied by a spout (3), the inlet opening (4) of which opens out on the outside of the casing, comprising a flap (4) mounted so as to pivot in the spout (3) about a axis (10, 11) transverse to the said spout and arranged at a given height h with respect to the inlet opening (4) of the said spout (3), thus determining a volume corresponding substantially to the volume of the infusion chamber when the said flap occupies a closure position, **characterised in that** the inlet opening (4) of the spout (3) is equipped with a cover (8) which is mounted so as to pivot about a axis (12) parallel to the transverse axis of the flap (7) between an introduction position and a closed position, and which is connected to the flap (7) by a mechanical control means (9) for making the flap (7) pivot from its closure position to a pouring position when the cover (8) pivots from its introduction position to its closed position.

2. Coffee dispenser according to claim 1, **characterised in that** the mechanical means (9) of controlling the flap comprises a link (14), one end (15) of which is mounted articulated on the cover (8) and the body (18) of which is connected to the flap by means of a sliding device (19).

3. Coffee dispenser according to claim 2, **characterised in that** the sliding device comprises, on the one hand, on the flap (7), in a region of its top surface situated between its two axes (10, 11 ; 12), a transverse flange (21) turned towards the inlet opening of the spout and having on its free edge (22) a runner (23) coming into engagement with the body (18) of the link (14), and on the other hand, on the link (14), a hook (24) arranged at its free end and intended to come into abutment against the runner (23) when the cover (8) is in its introduction position.

4. Coffee dispenser according to claim 3, **characterised in that** the link (14) is shaped like a U-shaped hairpin with two legs, each free end (15) of which is mounted articulated on the cover (8), and the runner (23) is formed in a lug projecting from the top edge (22) of the flange (21) and forming a T; the bottom edges (23') of this T and the edge (22) of this flange constitute respectively the housings for the two legs of the link.

5. Coffee dispenser according to claim 4, **characterised in that** the hook (24) formed by the fold of the U-shaped hairpin constitutes a scraper for the top surface of the flap (7).

6. Coffee dispenser according to any one of the preceding claims, **characterised in that** the flap (7) comprises a control device (25) for a switch (26) mounted outside the spout (3) and intended to control an indicator light indicating the passage of the flap from its closure position to its pouring position.

7. Coffee dispenser according to claim 6, **characterised in that** the control device (25) comprises a rotary cam mounted on the axis of the flap (7) and able to control the switch (26).

## Patentansprüche

1. Dosiereinrichtung für gemahlenen Kaffee zum Einbau in einem Gehäuse (1) einer Brühmaschine mit einer kalibrierten Brühkammer (2), die durch einen Zulauf (3) gespeist ist, dessen Einlaßöffnung (4) sich zur Umgebung des Gehäuses öffnet, mit einer Klappe (7), die im Zulauf (3) um eine quer zum Zulauf verlaufende und in einer bestimmten Höhe (h) bezüglich der Einlaßöffnung (4) des Zulaufs (3) angeordnete Achse (10, 11) schwenkbar montiert ist und so ein Volumen bestimmt, das im Wesentlichen dem Volumen der Brühkammer entspricht, wenn die Klappe eine Verschlußstellung einnimmt, **dadurch gekennzeichnet, daß** die Einlaßöffnung (4) des Zulaufs (3) mit einem Deckel (8) ausgerüstet ist, der um eine zur Querachse der Klappe (7) parallele Achse (12) zwischen einer Einfüllstellung und einer Schließstellung schwenkbar und mit der Klappe (7) durch eine mechanische Steuerungseinrichtung (9) verbunden ist, welches ermöglicht, die Klappe (7) aus ihrer Verschlußstellung in eine Abgabestellung zu schwenken, wenn der Deckel (8) aus seiner Füllstellung in seine Schließstellung schwenkt.

2. Dosiereinrichtung für Kaffee nach Anspruch 1, **dadurch gekennzeichnet, daß** die mechanische Steuerungsvorrichtung (9) der Klappe (7) einen Schwingarm (14) aufweist, von dem ein Ende (15) am Deckel (8) angelenkt ist und dessen Körper (18) mit der Klappe (7) mittels einer Gleitvorrichtung (19) verbunden ist.

3. Dosiereinrichtung für Kaffee nach Anspruch 2, **dadurch gekennzeichnet, daß** die Gleitvorrichtung einerseits an der Klappe (7) in einem zwischen den zwei Achsen (10, 11; 12) liegenden Bereich ihrer oberen Fläche einen Querflügel (21) aufweist, der der Einlaßöffnung des Zulaufs zugewandt ist und an seinen freien Rand (22) eine Gleitschiene (23) aufweist, die in Eingriff mit dem Körper (18) des Schwingarms (14) kommt, und andererseits am Schwingarm (14) einen Haken (24) aufweist, der an seinem freien Ende ausgebildet ist und dazu dient, in Anschlag gegen die Gleitschiene (23) zu kommen, wenn der Deckel (8) in seiner Einfüllstellung ist.

4. Dosiereinrichtung für Kaffee nach Anspruch 3, **dadurch gekennzeichnet, daß** der Schwingarm (14) als U-fömiger Bügel mit zwei Armen ausgebildet ist, von denen jedes freie Ende (15) am Deckel (8) angelenkt ist, und die Gleitschiene (23) in einem vom oberen Rand (22) des Flügels (21) vorspringenden T-förmigen Fuß ausgebildet ist, wobei die unteren Ränder (23') dieses T und der Rand (22) dieses Flügels jeweils die Sitze für die zwei Arme des Schwingarms bilden.

5. Dosiereinrichtung für Kaffee nach Anspruch 4, **dadurch gekennzeichnet, daß** der an der Biegung des U-förmigen Bügels gebildete Haken (24) einen Schaber der oberen Fläche der Klappe (7) bildet.

6. Dosiereinrichtung für Kaffee nach einem der vorangehenden Ansprüche, **dadurch gekennzeichnet, daß** die Klappe (7) eine Steuervorrichtung (25) eines Schalters (26) aufweist, die an der Außenseite des Zulaufs (3) montiert ist und dazu bestimmt ist, ein Leuchtzeichen zur Anzeige des Übergangs der Klappe aus ihrer Verschlußstellung in ihre Abgabestellung zu steuern.

7. Dosiereinrichtung für Kaffee nach Anspruch 6, **dadurch gekennzeichnet, daß** die Steuervorrichtung (25) eine auf der Achse der Klappe (7) montierte drehbare Nocke aufweist, die zur Steuerung des Schalters (26) ausgebildet ist.
